# EUROPEAN PATENT SPECIFICATION

(11) **EP 0 480 705 B1**
(45) Date of publication and mention of the grant of the patent: **29.01.1997**
(21) Application number: 91309280.5
(22) Date of filing: 09.10.1991
(51) Int. Cl.: C09B 63/00, C09B 67/22, C09B 29/20, C09D 11/00, C08K 5/23

(54) **Monoazo lake pigment, process for producing the same and its use**
Monoazo-Farblack, Verfahren zu dessen Herstellung und seine Verwendung
Laque monoazoique, procédé de sa fabrication et son utilisation

(30) Priority: 11.10.1990 JP 272628/90
(43) Date of publication of application: 15.04.1992
(73) Proprietor: TOYO INK MANUFACTURING CO., LTD., Tokyo (JP)
(72) Inventor: Hirasawa, Yuuji, c/o Toyo Ink Manufac. Co., Ltd., Tokyo (JP); Mochizuki, Akimitsu, c/o Toyo Ink Manuf. Co., Ltd., Tokyo (JP)
(74) Representative: Woods, Geoffrey Corlett

(56) References cited:
- US-A- 4 767 844

## Description

### Field of the Invention

The present invention relates to a monoazo lake pigment useful for various purposes, particularly as a pigment in a printing ink, and a printing ink containing the monoazo lake.

### Prior Art of the Invention

Conventionally, monoazo lake pigments obtained from an aromatic amine having a soluble group and either β-naphthol or β-oxynaphthoic acid are widely used as a color pigment in printing inks, coating compositions and plastics. In particular, a large amount of Pigment Red 57 (C.I. 15850) is used as a pigment for a process deep-red ink. In order to impart these monoazo lake pigments with a clear color tone and improved tinting strength, these monoazo lake pigments are products obtained by treatment with 1 to 30 % by weight, based on the monoazo lake pigments, of rosin. For example, the above Pigment Red 57 is a product obtained by treatment with as large as 20 to 30 % by weight, based on the monoazo lake pigment, of rosin.

These pigments have the following defects: When these pigments are used in printing inks, all of inks obtained, if these are gravure inks, have a high viscosity, and these inks are unstable with time. When the above pigments are used in offset inks (lithographic inks), a rosin component is eluted into a dampening solution, and when the offset inks are emulsified in water, their fluidity changes, or the surface tension of the emulsifying water decreases. As a result, the printability of the printing inks decreases.

In order to overcome the above defects, there have been studied processes for synthesizing rosin-less pigments or pigments of which the rosin content is decreased to 1 to 7 % by weight. However, the pigments obtained by such processes show an unclear color tone and a decreased tinting strength.

Further, it is known to improve a monoazo lake pigment by mixing the monoazo lake pigment with a naphthol AS or its derivative and subjecting the mixture to a coupling reaction (U.S. Patent 4,767,844). However, the resultant monoazo lake pigment is not satisfactory in respect of tinting strength and color tone clearness.

### Summary of the Invention

It is an object of the present invention to provide a monoazo lake pigment which is excellent in clearness, transparency, gloss and tinting strength.

It is another object of the present invention to provide a printing ink which is excellent in fluidity and stability with time.

It is further another object of the present invention to provide a pigment which exhibits excellent properties when used in a coating composition and plastic.

According to the present invention, there is provided a monoazo lake pigment obtainable by subjecting an aromatic amine having a soluble group as a diazo component and either β-naphthol or β-oxynaphthoic acid as a coupler component to a coupling reaction and forming a lake pigment from a coupling reaction product during or after the coupling reaction, the coupler component containing 0.1 to 30 mol%, preferably 0.3 to 15 mol%, based the coupler component, of a compound of the following formula (1), 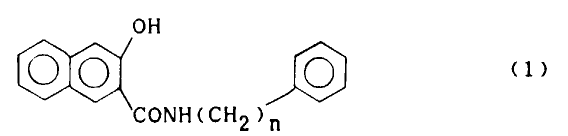 wherein n = 1 or 2.

According to the present invention, there is provided a process for producing the above monoazo lake pigment.

Further, according to the present invention, there is provided a printing ink containing the above monoazo lake pigment and a vehicle for a printing ink.

Furthermore, according to the present invention, there is provided use of the above monoazo lake pigment as a colorant for a coating composition or a plastic.

### Detailed Description of the Invention

The aromatic amine having a soluble group, used in the present invention, is selected from known compounds, and preferred are those compounds which have a sulfonic acid group or a carboxylic acid group. Examples of the compounds having a sulfonic acid group are aminobenzenesulfonic acids such as 3-aminobenzenesulfonic acid, 4-aminobenzenesulfonic acid, 3-amino-4-chlorobenzenesulfonic acid, 2-chloro-5-aminobenzenesulfonic acid, 2,5-dichloro-4-aminobenzenesulfonic acid, 3-amino-4-hydroxybenzenesulfonic acid, 2-hydroxy-5-aminobenzenesulfonic acid, 2-hydroxy-4-aminobenzenesulfonic acid, 2-hydroxy-3-amino-5-chlorobenzenesulfonic acid, 3-methyl-4-aminobenzenesulfonic acid, 3-amino-4-methylbenzenesulfonic acid, 2-methyl-4-aminobenzenesulfonic acid, 2,4-dimethyl-5-aminobenzenesulfonic acid, 2-methyl-3-chloro-5-aminobenzenesulfonic acid, 2-methyl-4-amino-5-hydroxybenzenesulfonic acid, 3-nitro-4-aminobenzenesulfonic acid, 2-nitro-4-aminobenzenesulfonic acid, 3-amino-4-hydroxy-5-nitrobenzenesulfonic acid, 2-hydroxy-3-nitro-5-aminobenzenesulfonic acid, 3-amino-4-methoxybenzenesulfonic acid, 2-methoxy-5-aminobenzenesulfonic acid, 3-methoxy-4-aminobenzenesulfonic acid, 2-methyl-4-amino-5-methoxybenzenesulfonic acid, 2-hydroxy-3-amino-5-methoxybenzenesulfonic acid, 3-acetylamino-5-aminobenzenesulfonic acid and 3-acetylamino-5-amino-6-hydroxybenzenesulfonic acid; aminonaphthalenesulfonic acids such as 2-amino-1-naphthalenesulfonic acid, 5-amino-1-naphthalenesulfonic acid, 5-amino-2-naphthalenesulfonic acid, 8-amino-1-naphthalenesulfonic acid, 5-acetylamino-2-amino-1-naphthalenesulfonic acid, 2-amino-8-benzoylamino-1-naphthalenesulfonic acid and 6-amino-2-naphthalenesulfonic acid; aminonaphthalenedisulfonic acids such as 7-amino-1,3-naphthalenedisulfonic acid, 6-amino-1,3-naphthalenedisulfonic acid and 2-amino-6,8-naphthalenedisulfonic acid; 4-(4-amino-3-methoxyphenylazo)benzenesulfonic acid; and 4,4'-diaminodiphenyl-2,2'-disulfonic acid.

Examples of the compounds having a carboxylic acid group are 2-aminobenzoic acid, 3-aminobenzoic acid, 2-hydroxy-3-aminobenzoic acid, 2-hydroxy-5-aminobenzoic acid, 3-amino-4-hydroxybenzoic acid, 3-amino-4-methoxybenzoic acid, 3-amino-4-chlorobenzoic acid, 3-chloro-4-aminobenzoic acid, 2-chloro-4-aminobenzoic acid, 3-amino-4-methylbenzoic acid, 2-nitro-4-aminobenzoic acid, 2-nitro-5-aminobenzoic acid, 3-amino-4-acetylaminobenzoic acid, 2-amino-1-naphthalenecarboxylic acid, 5-amino-1-naphthalenecarboxylic acid, 5-amino-2-naphthalenecarboxylic acid, 8-amino-1-naphthalenecarboxylic acid, 5-acetylamino-1-naphthalenecarboxylic acid, 2-amino-8-benzoylamino-1-naphthalenecarboxylic acid and 7-amino-1,3-naphthalenedicarboxylic acid.

The coupler component used in the present invention is selected from known compounds such as β-naphthol and β-oxynaphthoic acid.

The compound of the above formula (1) used in combination with the coupler component is a product obtained by a reaction between β-oxynaphthoic acid and either benzylamine or phenetylamine. The amount of the compound of the formula (1) for use based on each of the β-naphthol and the β-oxynaphthoic acid is 0.1 to 30 mol%, preferably 0.3 to 15 mol%. When this amount is less than the above lower limit, a monoazo lake pigment having high tinting strength, high clearness, high gloss and excellent fluidity cannot be obtained. When this amount exceeds the above upper limit, no further effect corresponding to such an excess amount can be obtained.

The monoazo lake pigment of the present invention can be produced from the above materials according to a known method for conventional monoazo lake pigments. That is, the aromatic amine having a soluble group is diazotized by a conventional method, and on the other hand, the coupler component is prepared by mixing the above β-naphthol or β-oxynaphthoic acid with the compound of the formula (1) according to a conventional method. And, the resultant diazo component and the coupler component are mixed with each other and subjected to a coupling reaction.

Then, the synthesized dye is formed into a lake pigment with a lake-forming agent, or a lake-forming agent is added to the coupler component in advance of the coupling reaction, and the coupling reaction is carried out, whereby the monoazo lake pigment of the present invention having improved properties as described above can be obtained.

The lake-forming agent is selected from known mineral acid and organic acid salts of calcium, strontium, barium, etc., such as sulfates, nitrates, hydrochlorides, phosphates, etc., and salts of manganese such as the above mineral acids and organic acids.

The pigment may be surface-treated by adding any one of water-soluble resin, a surfactant and other additive to the diazo component, the coupler component or a slurry of the dye or the pigment.

The monoazo lake pigment obtained in the above manner has a remarkably higher tinting strength and clearness than conventional monoazo lake pigments, and it is free from a decrease in printability which is caused when any one of conventional rosin-treated pigments is used in a printing ink.

According to the present invention, there is provided a process for producing such a monoazo lake pigment, which process is excellent in thermal stability under heat treatment for the synthesis of the pigment and under heat treatment for flushing from an aqueous paste. That is, in conventional processes for synthesizing monoazo lake pigments, pigment particles undergo crystal growth under heat treatment for synthesizing monoazo lake pigments or for flushing, and as a result, the resultant monoazo lake pigments show an extraordinary decrease in tinting strength. In contrast, the process of the present invention does not involve such a defect, and can produce a monoazo lake pigment very effectively.

Further, according to the present invention, there is provided an ink containing the monoazo lake pigment of the present invention and a vehicle for a printing ink. The vehicle for an offset ink comprises 20 to 50 parts by weight of a resin such as a rosin-modified phenolic resin, a petroleum resin, an alkyd resin or a drying oil-modified resin of these and 10 to 60 parts by weight of a solvent such as n-paraffin, isoparaffin, aromatic, naphthene or α-olefin. An offset ink can be prepared by incorporating the monoazo lake pigment of the present invention into the above vehicle, and also adding known additive(s) such as another solvent for an ink, a dryer, a leveling improver, a thickener, etc.

A gravure ink contains 10 to 50 parts by weight of a resin mixture, 30 to 80 parts by weight of a solvent, 3 to 35 parts by weight of the monoazo lake pigment of the present invention and 1 to 20 parts by weight of an extender. The component for the resin mixture is selected from gum rosin, wood rosin, tall oil rosin, calcified rosin, lime rosin, rosin ester, a maleic acid resin, gilsonite, dammar, shellac, a polyamide resin, a vinyl resin, nitrocellulose, cyclized rubber, chloride rubber, ethylcellulose, cellulose acetate, an ethylene-vinyl acetate copolymer, a urethane resin, a polyester resin and an alkyd resin. The solvent is selected from n-hexane, toluene, ethanol, methanol, acetone, ethyl acetate, ethyl lactate, cellosolve, diacetone alcohol, chlorobenzole, ethyl ether, acetal ethyl ether, ethyl acetoacetate and butylcellosove acetate. The extender is selected from barium sulfate, barium carbonate, calcium carbonate, gypsum, alumina white, clay, silica, talc, calcium silicate and precipitating magnesium carbonate. The ink may further contain other aid(s) such as a plasticizer, an ultraviolet light preventer, an antioxidant, an antistatic agent, etc.

The monoazo lake pigment of the present invention has higher tinting strength and higher transparency than any one of conventional monoazo lake pigments. Further, in addition to these effects, the monoazo lake pigment of the present invention shows excellent fluidity.

When a conventional azo pigment treated with a large amount of rosin is used in a printing ink, the printability of the ink is decreased. In contrast, an ink containing the monoazo lake pigment of the present invention exhibits excellent printability.

Further, the monoazo lake pigment produced according to the process of the present invention is excellent in thermal stability under heat treatment for flushing. That is, in a conventional process for producing a monoazo lake pigment, crystal growth and aggregation of pigment particles occur under heat treatment for flushing, which crystal growth and aggregation are causes for rendering an ink opaque and give rise to a decrease in tinting strength of an ink. The monoazo lake pigment produced according to the process of the present invention is free from such defects.

The present invention will be described further in detail hereinafter by reference to Examples, in which "part" stands for "part by weight" and "%" stand for "% by weight".

### Example 1 and Comparative Example 1

18.7 Parts of 1-amino-4-methylbenzene-2-sulfonic acid was stirred together with 400 parts of water and 4 parts of sodium hydroxide at room temperature for 30 minutes to completely dissolve the 1-amino-4-methylbenzene-2-sulfonic acid in the water. 25 Parts of 35 % hydrochloric acid was added to the resultant solution to acidify the solution, and then 20 parts of ice was added to cool the solution to a temperature between 0°C and 3°C. A solution of 7 parts of sodium nitrite in 25 parts of water was added, and the resultant mixture was stirred at a temperature not higher than 5°C for 30 minutes to give a diazo component.

Separately, 15.5 parts of β-oxynaphthoic acid and 3.5 parts of the following compound (1) were stirred together with 1 part of natural rosin, 1,000 parts of water and 10 parts of sodium hydroxide at a temperature of 40°C for 20 minutes to completely dissolve these components in the water, and the resultant solution was cooled to 15°C to give a coupler component.

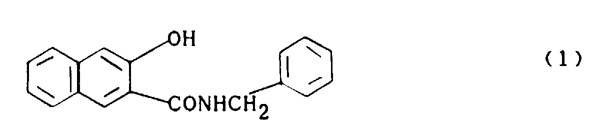

The above diazo component was added dropwise to the coupler component over 30 minutes, and further, the resultant mixture was stirred for 1 hour to complete the coupling reaction. The coupling reaction mixture had pH of 9.5 to 10.0. Then, 58 parts of a 35 % calcium chloride aqueous solution was added, and the resultant mixture was stirred for 2 hours to carry out a lake-forming reaction. The reaction mixture was heated to 80°C, and filtered. The remaining solid was washed with water, dried and milled to give 43 parts of a monoazo lake pigment (Example 1).

The above procedure was repeated except that 15.5 parts of the β-oxynaphthoic acid and 3.5 parts of the compound (1) were replaced with 18.6 parts of β-oxynaphthoic acid, whereby 43 parts of a monoazo lake pigment (Comparative Example 1) was obtained.

The above-obtained monoazo lake pigments were respectively formulated into inks as follows.

A varnish was prepared by adding 20 parts of linseed oil and 30 parts of No. 5 solvent (ink solvent, supplied by Nippon Oil Co., Ltd.) to 50 parts of a rosin-modified phenolic resin (Tamanol 361, supplied by Arakawa Chemical Industries, Inc.) and forming a dissolved varnish from the resultant mixture under heat at 200°C. Then, 2 parts of aluminum octylate was added to the 98 parts of the varnish to form a varnish gel.

70 Parts of the varnish gel, 20 parts of the monoazo lake pigment (red pigment) obtained in Example 1 and 10 parts of No. 1 solvent (ink solvent, supplied by Nippon Oil Co., Ltd.) were mixed, and the resultant mixture was kneaded with a three-roll mill to give an offset ink having a tackiness value of 9.0. Further, an offset ink having a tackiness value of 9.0 was also obtained from the monoazo lake pigment of Comparative Example 1 in the same manner as above. The offset ink containing the monoazo lake pigment of Example 1 (present pigment) was remarkably superior to the offset ink containing the monoazo lake of Comparative Example 1 (comparative pigment) in transparency, clearness (visually evaluated) and tinting strength. In addition, the tinting strength was evaluated by spreading (drawing down) a mixture of a white ink with the above offset ink containing the present pigment and a mixture of a white ink with the above offset ink containing the comparative pigment. The offset ink containing the present pigment had higher tinting strength than the offset ink containing the comparative pigment. That is, when the color density of the mixture of the offset ink containing the present pigment was rendered equal to that of the mixture of the offset ink containing the comparative pigment, the amount of the white ink in the mixture of the offset ink containing the present pigment could be increased by about 10 %.

### Example 2 and Comparative Example 2

18.7 Parts of 1-amino-4-methylbenzene-2-sulfonic acid was diazotized according to a conventional method, and 58 parts of a 35 % calcium chloride aqueous solution was added to give a diazo solution.

Separately, 15 parts of β-oxynaphthoic acid and 4.0 parts of the following compound (2) were mutually dissolved according to a conventional method to give a coupler solution.

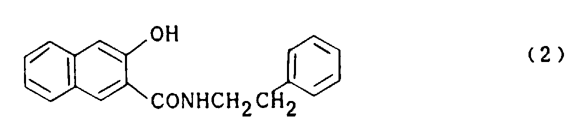

The coupler solution was rapidly mixed with the above diazo solution to complete the coupling reaction and the lake-forming reaction, and the reaction mixture was heated to 80°C and filtered. The remaining solid was washed with water to give 43 parts of a monoazo lake pigment (Example 2).

The above procedure was repeated except that 15 parts of the β-oxynaphthoic acid and 4.0 parts of the compound (2) were replaced with 18.0 parts of β-oxynaphthoic acid, whereby a monoazo lake pigment (Comparative Example 2) was obtained.

Offset inks were prepared from the above monoazo lake pigments in the same manner as in Example 1. The offset ink containing the monoazo lake pigment of Example 2 was remarkably superior to the offset ink containing the monoazo lake pigment of Comparative Example 2 in transparency, clearness and tinting strength.

### Example 3 and Comparative Example 3

16.4 parts of 1-amino-4-methylbenzene-2-sulfonic acid and 0.3 part of 2-aminonaphthalene-1-sulfonic acid were diazotized according to a conventional method, and 58 parts of a 35 % calcium chloride aqueous solution was added to give a diazo component.

Separately, 16 parts of β-naphthol, 1.0 part of the following compound (1) and 1 part of natural rosin were mutually dissolved to give a coupler component.

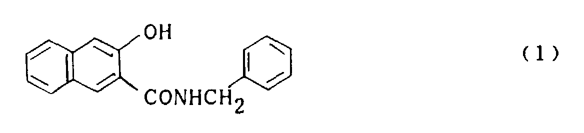

The above two components were mixed to complete the coupling reaction and the lake-forming reaction, and the reaction mixture was heated to 80°C and filtered. The remaining solid was washed with water to give 44.5 parts of a monoazo lake pigment (Example 3).

The above procedure was repeated except that 16 parts of the β-naphthol and 1.0 parts of the compound (1) were replaced with 16.6 parts of β-naphthol, whereby a monoazo lake pigment (Comparative Example 3) was obtained.

Offset inks were prepared from the above monoazo lake pigments in the same manner as in Example 1. The offset ink containing the monoazo lake pigment of Example 3 was remarkably superior to the offset ink containing the monoazo lake pigment of Comparative Example 3 in transparency, clearness and tinting strength.

### Example 4 and Comparative Examples 4 and 5

Example 2 was repeated except that the compound (2) was replaced with 3.5 parts of the compound (1), whereby 41 parts of a monoazo lake pigment (Example 4) was obtained.

Example 2 was repeated except that 15 parts of the β-oxynaphthoic acid and 4.0 parts of the compound (2) were replaced with 18.1 parts of β-oxynaphthoic acid, whereby 40 parts of a monoazo lake pigment (Comparative Example 4) was obtained. Further, Example 2 was repeated except that 4.0 parts of the compound (2) was replaced with 3.5 parts of naphthol AS, whereby 42 parts of a monoazo lake pigment (Comparative Example 5) was obtained.

### 1. Preparation of base ink

Lime rosin: 84 parts
Toluene: 46 parts
Pigment: 25 parts

155 Grams of a mixture of the above components was charged into a 225 ml glass bottle together with 180 g of steel balls having a diameter of 3 mm, and dispersed with a paint conditioner (to be referred to "PC" hereinafter) for 40 minutes.

### 2. Preparation of adjustment ink

Base ink: 54.5 parts
Line rosin: 39 parts
Toluene: 10 parts

85 Grams of a mixture of the above components was charged into a 140 ml glass bottle and mixed with PC for 5 minutes. Then the amount of toluene was adjusted such that the viscosity of the mixture became 15 seconds with a silk cup #2.

### 3. Preparation of light-color ink

Base ink: 3.1 parts
White ink: 30 parts

33 Grams of a mixture of the above component was charged into a 70 ml glass bottle, and mixed with PC for 5 minutes to obtain a light color ink.

### 4. Application of ink

(1) Adjustment inks were respectively coated on a coat paper with a #3 bar coater to measure their transparency. The adjustment inks were also coated on nonpenetrate paper to measure their glossiness.
(2) Light color inks were coated on a coat paper with a #6 bar coater to measure their tinting strength.

### 5. Measurement of property values

Base inks were measured for viscosities with a Brookfield viscometer.

Deep-color inks spread on nonpenetrate paper were measured for glossiness values at 60 degrees with a digital angle-variable glossmeter (model UGV-5D) supplied by Suga Shikenki (k.K.).

Light-color inks spread on a coat paper were measured for K values with a color machine (model Σ80) supplied by Nippon Denshoku Kogyo. The tinting strength was expressed as a relative value to the L-value of Comparative Example 4 which was taken as 100.

The transparency was visually evaluated on inks spread on a black band. (5: transparent, 4: transparent to some extent, 3 STD = Comparative Example 4, 2: opaque to some extent, 1: opaque)

The hue was visually evaluated on inks spread on coat paper.

The gravure ink containing the monoazo lake pigment of Example 4 was remarkably superior to the gravure inks containing the monoazo lake pigment of Comparative Example 4 and the monoazo lake pigment of Comparative Example 5 in fluidity, tinting strength, transparency and gloss.

**Table 1**

| | Transparency | Hue | Gloss (%) | Viscosity (CPS:6/60 rpm) | Tinting strength (%) |
|---|---|---|---|---|---|
| Example 4 | 5 | Yellowish to some extent | 40.7 | 50/50 | 110 |
| Comparative Example conventionally treated | 3 | STD | 36.4 | 125/125 | STD |
| Comparative Example treated with naphthol AS | 4 | Yellowish to some extent | 35.0 | 400/220 | 105 |

## Claims

1. A monoazo lake pigment obtainable by coupling an aromatic amine having a soluble group as a diazo component with either β-naphthol or β-oxynaphthoic acid as a coupler component and forming a lake pigment from the coupling reaction product during or after the coupling reaction, the coupler component containing 0.1 to 30 mol%, based on said coupler component, of a compound of formula (1), 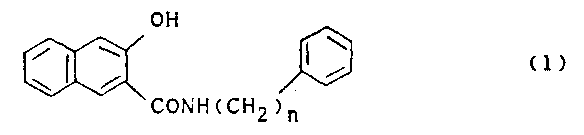 wherein n is 1 or 2.

2. A pigment according to claim 1, wherein the aromatic amine is a naphthalene, naphthalene derivative, benzene, or benzene derivative amine having a sulfonic acid or carboxyl group.

3. A pigment according to claim 1 or 2, wherein the coupler component contains 0.3 to 15 mol%, based on the coupler component, of the compound of formula (1).

4. Use of a monoazo lake pigment as claimed in claim 1, 2 or 3 in a printing ink containing a monoazo lake pigment and a vehicle.

5. Use of a monoazo lake pigment as claimed in claim 1, 2 or 3 as a coating composition.

6. Use of a monoazo lake pigment as claimed in claim 1, 2 or 3 as a colorant for plastics.

7. A process for producing a monoazo lake pigment, which comprises coupling an aromatic amine having a soluble group as a diazo component with either β-naphthol or β-oxynaphthoic acid as a coupler component together with 0.1 to 30 mol%, based on said coupler component, of a compound of formula (1), 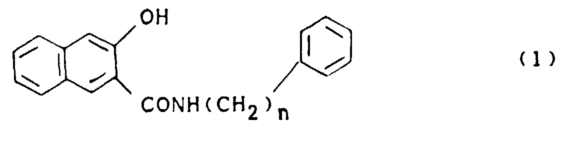 wherein n is 1 or 2,
and forming a lake pigment from the coupling reaction product during or after the coupling reaction.

8. A process according to claim 7, wherein the amount of the compound of formula (1) is 0.3 to 15 mol% based on the coupler component.

9. A process according to claim 7 or 8, wherein the aromatic amine having a soluble group is a naphthalene, naphthalene derivative, benzene, or benzene derivative amine having a sulfonic acid or carboxyl group.

## Patentansprüche

1. Monoazo-Lackpigment, erhältlich durch Kopplung eines aromatischens Amins mit einer löslichen Gruppe als eine Diazokomponente mit entweder β-Naphthol oder β-Oxynaphthoesäure als eine Kopplerkomponente und Bildung eines Lackpigmentes aus dem Kopplungsreaktionsprodukt während oder nach der Kopplungsreaktion, wobei die Kopplerkomponente 0,1 bis 30 Mol-%, bezogen auf die Kopplerkomponente, einer Verbindung der Formel (1) 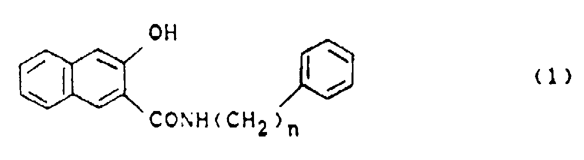 enthält, worin n 1 oder 2 ist.

2. Pigment gemäß Anspruch 1, wobei das aromatische Amin ein Naphthalin-, Naphthalinderivat-, Benzol- oder Benzolderivatamin mit einer Sulfonsäure- oder Carboxylgruppe ist.

3. Pigment gemäß Anspruch 1 oder 2, wobei die Kopplerkomponente 0,3 bis 15 Mol-%, bezogen auf die Kopplerkomponente, der Verbindung der Formel (1) enthält.

4. Verwendung eines Monoazo-Lackpigmentes, wie in Anpruch 1, 2 oder 3 beansprucht, in einer Drucktinte, welche ein Monoazo-Lackpigment und ein Vehikel enthält.

5. Verwendung eines Monoazo-Lackpigmentes, wie es in den Ansprüchen 1, 2 oder 3 beansprucht wird, als Beschichtungsmasse.

6. Verwendung eines Monoazo-Lackpigmentes, wie es in den Ansprüchen 1, 2 oder 3 beansprucht wird, als Färbemittel für Kunststoffe.

7. Verfahren zur Herstellung eines Monoazo-Lackpigmentes, welches das Koppeln eines aromatischen Amins mit einer löslichen Gruppe als eine Diazokomponente mit entweder β-Naphthol oder β-Oxynaphthoesäure als eine Kopplerkomponente zusammen mit 0,1 bis 30 Mol-%, bezogen auf die Kopplerkomponente, einer Verbindung der Formel (1) 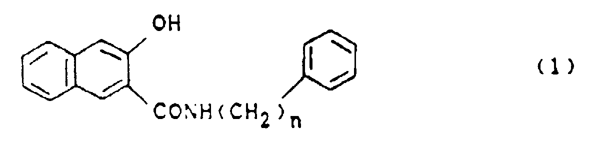 worin n 1 oder 2 ist,
und das Bilden eines Lackpigmentes aus dem Kopplungsreaktionsprodukt während oder nach der Kopplungsreaktion umfaßt.

8. Verfahren gemäß Anspruch 7, wobei die Menge der Verbindung der Formel (1) 0,3 bis 15 Mol-%, bezogen auf die Kopplerkomponente, beträgt.

9. Verfahren gemäß Anspruch 7 oder 8, wobei das aromatische Amin mit einer löslichen Gruppe Naphthalin-, Naphthalinderivat-, Benzol- oder Benzolderivatamin mit einer Sulfonsäure- oder Carboxylgruppe ist.

## Revendications

1. Un pigment de laque monoazoïque que l'on peut obtenir en couplant une amine aromatique contenant un groupe soluble en tant que composant diazoïque avec du β-naphtol ou de l'acide β-oxynaphtoïque en tant que composant copulant et en formant un pigment de laque à partir du produit de la réaction de copulation pendant ou après la réaction de copulation, le composant copulant contenant 0,1 à 30 % mol., sur la base dudit composant copulant, d'un composé de la formule (1) 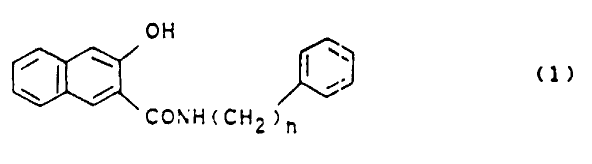 dans laquelle n est égal à 1 ou 2.

2. Un pigment selon la revendication 1, dans lequel l'amine aromatique est une amine de naphtalène, d'un dérivé de naphtalène, de benzène, ou d'un dérivé du benzène contenant un groupe acide sulfonique ou carboxyle.

3. Un pigment selon la revendication 1 ou 2, dans lequel le composant copulant contient 0,3 à 15 % mol., sur la base du composant copulant, du composé de la formule (1).

4. L'utilisation d'un pigment de laque monoazoïque selon la revendication 1, 2 ou 3 dans une encre d'imprimerie contenant un pigment de laque monoazoïque et un véhicule.

5. L'utilisation d'un pigment de laque monoazoïque selon la revendication 1, 2 ou 3 comme composition de revêtement.

6. L'utilisation d'un pigment de laque monoazoïque selon la revendication 1, 2 ou 3 comme colorant pour les matières plastiques.

7. Un procédé pour la production d'un pigment de laque monoazoïque, qui consiste à coupler une amine aromatique contenant un groupe soluble en tant que composant diazoïque avec du β-naphtol ou de l'acide β-oxynaphtoïque en tant que composant copulant avec 0,1 à 30 % mol., sur la base dudit composant copulant, d'un composé de la formule (1), 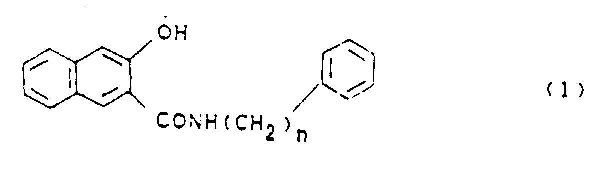 dans laquelle n est égal à 1 ou 2,
et à former un pigment de laque à partir du produit de la réaction de copulation pendant ou après la réaction de copulation.

8. Un procédé selon la revendication 7, dans lequel la quantité du composé de la formule (1) est de 0,3 à 15 % mol. sur la base du composant copulant.

9. Un procédé selon la revendication 7 ou 8, dans lequel l'amine aromatique contenant un groupe soluble est une amine de naphtalène, d'un dérivé de naphtalène, de benzène ou d'un dérivé du benzène contenant un groupe acide sulfonique ou un groupe carboxyle.
